# EUROPEAN PATENT APPLICATION

(11) **EP 4 645 967 A1**
(43) Date of publication of application: **05.11.2025**
(21) Application number: 22969840.2
(22) Date of filing: 30.12.2022
(51) Int. Cl.: H04W 52/36

(54) **POWER INFORMATION REPORTING METHOD AND APPARATUS, DEVICE AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/144202
(87) International publication number: WO 2024/138698

(57) **Abstract**

The present disclosure relates to a power information reporting method and apparatus, a device and a storage medium. The method comprises: in response to a terminal sanctifying a reporting control condition, determining power domain information of the terminal, the power domain information being used for indicating information related to terminal power; and sending the power domain information to a network device. By means of the reporting control condition, the terminal can send the power domain information to the network device, thus supporting efficient and reasonable terminal enhancement reporting, which is conducive to a network to achieve more optimal scheduling, and more suitable for service sending demand scheduling. Furthermore, the system throughput and the user coverage are improved, which is conducive to improving the system efficiency, reducing the invalid scheduling of the network device, and saving unnecessary power consumption tor the terminal.

## Description

### TECHNICAL FIELD

The disclosure relates to the field of communication technology, and in particular to a method and an apparatus for reporting power information, a device, and a storage medium.

### BACKGROUND

For a terminal equipped with dual power amplifiers (PAs) supporting carrier aggregation (CA)/dual connectivity (DC), the PA capabilities of the terminal across different frequency bands may be different. The maximum transmission power of the terminal is further constrained by a power class (PC) defined by the terminal.

In current communication research, uplink (UL) coverage is always one of the bottlenecks for system performance, affecting signal quality and user experience. There exists a strong demand from operators for UL coverage enhancement. In UL CA/DC implementations of a new radio (NR), the terminal may operate with a band combination (BC), where one band may support a particular power class while another band may support a different power class, and the maximum transmission power defined on the BC is subject to the power class of the terminal defined on that BC.

When UL transmission is actually performed, the terminal is subject to regulatory constraints on radio frequency (RF) exposure, which may affect an actual transmission power and induce transmission power fluctuations or interruptions. However, the terminal is transparent to a network device during the implementations, and the network device is not aware of the reasons why the transmission power fluctuations or interruptions of the terminal occur. Further, changes in the transmission power of the terminal may also affect scheduling of the network device to a certain extent.

Consequently, how to enable the network device to obtain power-related information of the terminal has become a problem that needs to be solved currently.

### SUMMARY

To overcome problems in the related art, the disclosure provides a method and an apparatus for reporting power information, a device, and a storage medium.

According to a first aspect of embodiments of the disclosure, a method for reporting power information is provided. The method is applied to a terminal, including: in response to the terminal satisfying a reporting control condition, determining power domain information of the terminal, in which the power domain information describes information related to a power of the terminal; and sending the power domain information to a network device.

According to a second aspect of embodiments of the disclosure, a method for reporting power information is provided. The method is applied to a network device, including: receiving power domain information from a terminal when the terminal satisfies a reporting control condition, in which the power domain information describes information related to a power of the terminal.

According to a third aspect of embodiments of the disclosure, an apparatus for reporting power information is provided. The apparatus includes: a processing module, configured to, in response to the terminal satisfying a reporting control condition, determine power domain information of the terminal, in which the power domain information describes information related to a power of the terminal; and a sending module, configured to send the power domain information to a network device.

According to a fourth aspect of embodiments of the disclosure, an apparatus for reporting power information is provided. The apparatus includes: a receiving module, configured to receive power domain information from a terminal when the terminal satisfies a reporting control condition, in which the power domain information describes information related to a power of the terminal.

According to a fifth aspect of embodiments of the disclosure, a device for reporting power information is provided. The device includes: a processor; and a memory storing processor executable instructions; in which the processor is configured to: perform the first aspect and any method according to the first aspect.

According to a sixth aspect of embodiments of the disclosure, a device for reporting power information is provided. The device includes: a processor; and a memory storing processor executable instructions; in which the processor is configured to: perform the second aspect and any method according to the second aspect.

According to a seventh aspect of embodiments of the disclosure, a non-transitory computer-readable storage medium is provided. Instructions in the storage medium, when executed by a processor of the terminal, enable the terminal to perform the first aspect and any method according to the first aspect.

According to an eighth aspect of embodiments of the disclosure, a non-transitory computer-readable storage medium is provided. Instructions in the storage medium, when executed by a processor of the terminal, enable the terminal to perform the second aspect and any method according to the second aspect.

The technical solutions provided in embodiments of the disclosure may include the following beneficial effects. The terminal may send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

It should be understood that the above general description and the following detailed description are only exemplary and explanatory, and do not limit the disclosure.

### BRIEF DESCRIPTION OF THE DRAWINGS

The accompanying drawings herein are incorporated in and constitute a part of the specification, illustrate embodiments consistent with the disclosure, and together with the description, serve to explain the principles of the disclosure.
FIG. 1 is a schematic diagram illustrating a wireless communication system according to an exemplary embodiment of the disclosure.
FIG. 2 is a schematic diagram illustrating an aggregated transmission power control of a terminal according to an exemplary embodiment.
FIG. 3 is a schematic diagram illustrating another aggregated transmission power control of the terminal according to an exemplary embodiment.
FIG. 4 is a schematic diagram illustrating another aggregated transmission power control of the terminal according to an exemplary embodiment.
FIG. 5 is a schematic diagram illustrating another aggregated transmission power control of the terminal according to an exemplary embodiment.
FIG. 6 is a schematic diagram illustrating a power headroom report (PHR) format of a single carrier according to an exemplary embodiment.
FIG. 7 is a schematic diagram illustrating a PHR format of multi-carrier according to an exemplary embodiment.
FIG. 8 is a flowchart illustrating a method for reporting power information according to an exemplary embodiment.
FIG. 9 is a flowchart illustrating another method for reporting power information according to an exemplary embodiment.
FIG. 10 is a block diagram illustrating an apparatus for reporting power information according to an exemplary embodiment.
FIG. 11 is a block diagram illustrating another apparatus for reporting power information according to an exemplary embodiment.
FIG. 12 is a block diagram illustrating a device for reporting power information according to an exemplary embodiment.
FIG. 13 is a block diagram illustrating another device for reporting power information according to an exemplary embodiment.

### DETAILED DESCRIPTION

Reference will now be made in detail to the exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the disclosure.

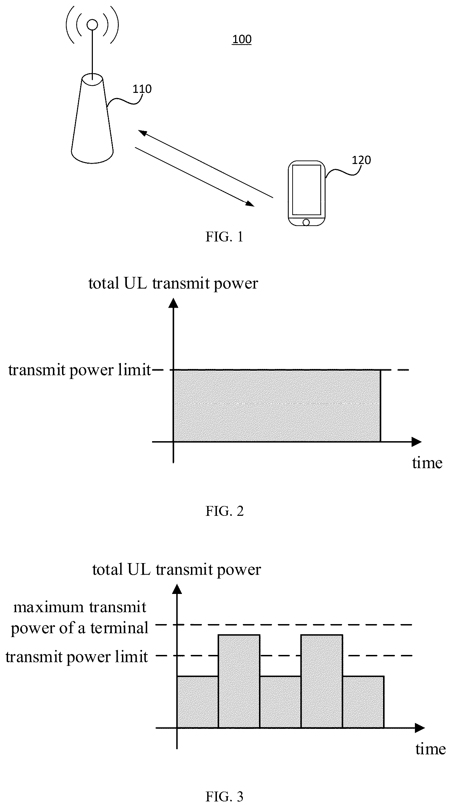

The communication method described in the disclosure may be applied in a wireless communication system 100 shown in FIG. 1. The network system may include a network device 110 and a terminal 120. It may be understood that the wireless communication system shown in FIG. 1 is only for schematic illustration. The wireless communication system may also include other network devices. For example, the wireless communication system may also include a core network device, a wireless relay device and a wireless backhaul device, etc., which are not depicted in FIG. 1. The embodiments of the disclosure do not limit the number of network devices and the number of terminals included in the wireless communication system.

It may be further understood that the wireless communication system in the embodiment of the disclosure is a network that provides a wireless communication function. The wireless communication system may utilize different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance (CSMA/CA). The networks may be categorized as a 2 generation (G) network, a 3G network, a 4G network, or a future evolutionary network, such as the 5th generation wireless communication system (5G) network based on capacities, speeds, delays, and other parameters of different networks. The 5G network may also be referred to as a new radio (NR) network. For ease of description, the disclosure may refer to a wireless communication network as simply a network.

Further, the network device 110 involved in the disclosure may also be referred to as a radio access network (RAN) device. The RAN device may be a base station, an evolved Node B (eNB), a home base station, an access point, a wireless relay node, a wireless backhaul node, a transmission point, or a transmission and reception point (TRP) in a wireless fidelity system. The RAN device may also be a next-generation node base (gNB) in an NR system, or a component or part of a device forming a base station, etc. In addition, when the communication system is a vehicle-to-electronic (V2X) communication system, the network device may also be an in-vehicle device. It should be understood that in the embodiments of the disclosure, specific techniques and specific device forms used for the network device are not limited.

Further, the terminal involved in the disclosure may also be referred to as a terminal device, a user equipment (UE), a mobile station (MS), a mobile terminal (MT), etc., which is a device that provides voice and/or data connectivity to a user. For example, the terminal may be a handheld device with wireless connectivity, an in-vehicle device, etc. Currently, the terminal may be a mobile phone, a customer premise equipment (CPE), a pocket personal computer (PPC), a handheld computer, a personal digital assistant (PDA), a laptop computer, a tablet computer, a wearable device, or an in-vehicle device, etc. In addition, In addition, when the communication system is a V2X communication system, the terminal may also be an in-vehicle device. It should be understood that in the embodiments of the disclosure, specific techniques and specific device forms used for the terminal are not limited.

In embodiments of the disclosure, the network device 110 and the terminal 120 may adopt any feasible wireless communication technology to realize transmitting data to each other. A transmission channel where the network device 110 sends data or control information to the terminal 120 is referred to as a downlink (DL) channel. A transmission channel where the terminal 120 sends data or control information to the network device 110 is referred to as an uplink (UL) channel. It may be understood that the network device involved in the embodiments of the disclosure may be a base station. The network device may also be any other possible network device, and the terminal may be any possible terminal, which is not limited in the disclosure.

Currently, in release 17 (R17), the terminal may be enhanced to achieve higher transmit power under carrier aggregation (CA)/dual connectivity (DC). A terminal equipped with dual power amplifier (PAs) may support CA/DC. It is taken as an example that a power class defined by the terminal is PC2, the PA capabilities of the terminal on different bands may be different. For example, Table 1 illustrates a UE power configuration.

| | UE power class | NR carrier x power class | NR carrier y power class |
|---|---|---|---|
| combination a | 26dBm | 23dBm | 23dBm |
| combination b | 26dBm | 23dBm | 26dBm |
| combination c | 26dBm | 26dBm | 23dBm |
| combination d | 26dBm | 26dBm | 26dBm |

In this case, carrier x and carrier y denote different bands. From Table 1, it may be noted that when the power class of the terminal on one band is defined as 23 dBm and the power class on another band is also defined as 23 dBm, the power class of the terminal is subject to a maximum of 26 dBm, such as cases of combination b and combination c. When the power class of the terminal on one band is defined as 23 dBm and the power class of the terminal on another band is defined as 26 dBm, the power class of the terminal is subject to a maximum of 26 dBm due to relevant protocol agreements. Similarly, for combination d, the power class of the terminal is also subject to a maximum of 26 dBm due to the relevant protocol agreements. That is, the maximum transmit power of the terminal is subject to the power class defined in the protocol agreements. In the R17 work item (WI) for increasing the upper limit of UE power under CA/DC, for a band combination where one band supports up to PC3 (23 dBm) and another band supports up to PC2 (26 dBm), a total power associated with the band combination may be assumed as a sum of individual power classes.

As the relevant protocol agreements specify power classes of the terminal, some solutions introduce a new capability signaling for each band combination. That is, to support relaxed signaling, a new maximum output power (MOP) capability signaling, such as HigherPowerLimitCADC, is introduced. The signaling may be applied to the terminal in a CA scenario where a transmit power class on one band supports PC3 and a transmit power class on another supports PC2. The bands may be those adopting time division duplexing (TDD) or frequency division duplexing (FDD). The terminal may utilize the new MOP capability to achieve a full power corresponding to a maximum composite power of up to 27.8 dBm using two PAs. In contrast, the terminal in R16 is limited to PC2 under the CA/DC configuration.

In some technologies, a critical aspect of enabling simultaneous transmission across a plurality of bands is ensuring that the terminal needs to comply with corresponding regulatory constraints when participating in a UL transmission. Regulatory constraints on total radio frequency (RF) exposure experienced by users require the terminal to determine safe transmit power levels for each band, i.e., RF exposure levels. When the terminal approaches or exceeds an allowed RF exposure level, the terminal must recalculate a safe transmit power for each band in use, resulting in changes to the UL transmit power during the UL transmission. In some cases, the terminal may configure its transmit power with a fixed limitation to ensure that the terminal never exceeds a limitation of the RF exposure level.

However, changes in the transmit power of the terminal are transparent to the network device, i.e., the network device is not aware of the reasons for the changes in the transmit power of the terminal, which affects the perception of link quality by the network device and link adaptation, subsequently causing fluctuations in UL throughput. That is, enabling the network device to better understand the constraints and the impact of the constraints on terminal behaviors may allow more refined and accurate scheduling decisions of the network device.

Depending on different band combinations, two types of RF exposure level limit indicators may be used. For example, a specific absorption rate (SAR) is used as one type of RF exposure level limit indicator for bands below 6 GHz (e.g., frequency range 1 (FR1)), while a maximum permissible exposure (MPE) calculated based on a measured power density (PD) is used as another type of RF exposure level limit indicator for millimeter-wave bands (e.g., FR2). Both indicators employ a time-averaging approach to limit the RF exposure. That is, the average RF exposure must remain below a specific threshold when measured using the above indicators and within a specific event window. However, it may be understood that the protocol agreements specify the average RF exposure, not an instantaneous RF exposure. There may be some exceptions in a specific area. When high power transmission is realized at the terminal, the time-averaged nature of the above constraints is a rather important aspect. This suggests that while it is not possible for the terminal to transmit at a full power all the time in all frequency bands, the terminal may operate in a higher transmit power for a short period of time.

During UL transmission, the terminal determines a max UL duty cycle (i.e., maximum UL duty cycle) that the terminal may support within a UL evaluation period based on the SAR/MPE requirement during an initial access phase. The terminal reports the max UL duty cycle (maxUplinkDutyCycle) to the network device. After establishing a communication connection with the network device, the network device configures a maximum UL duty cycle used for subsequent transmissions, denoted as maxULdutycycle or maxUplinkDutyCycle, for the terminal based on the max UL duty cycle reported by the terminal. The terminal controls actual UL transmissions based on a transmission symbol ratio corresponding to the maximum UL duty cycle configured by the network device within the UL evaluation period. However, such adjustments remain transparent to the network device. In addition, due to specifications related to some country/region that may impose mandatory SAR/MPE radiation exposure requirements on the terminal across different frequency bands, the terminal satisfies UL duty cycle requirements through actual transmissions within the UL evaluation period to comply with the SAR/MPE requirements.

For example, FIG. 2 is a schematic diagram illustrating an aggregated transmission power control of the terminal according to an exemplary embodiment. The gray area indicates that a total transmit power of the terminal within a UL duty cycle must satisfy the transmit power limit. It may be understood that the transmit power limit is a power limit determined by a carrier/cell to satisfy the SAR/MPE requirement, e.g., 23 dBm. It may be understood that the transmit power limit may be a SAR limit or an MPE limit. As shown in FIG. 2, the terminal maintains an average transmit power within the UL duty cycle that complies with the transmit power limit.

In practice, the transmit power of the terminal may be lower than the transmit power limit in some transmission slots and the transmit power of the terminal may be higher than the transmit power limit in other transmission slots, as shown in FIG. 3. It may be seen from FIG. 3 that the terminal ensures that the average transmit power on UL transmission symbols corresponding to the actual UL duty cycle ratio within the UL evaluation period does not exceed the transmit power limit. Although the instantaneous transmit power in a specific slot may exceed the transmit power limit, it must still satisfy the requirement of the maximum transmit power of the terminal, that is, it cannot exceed the maximum transmit power of the terminal.

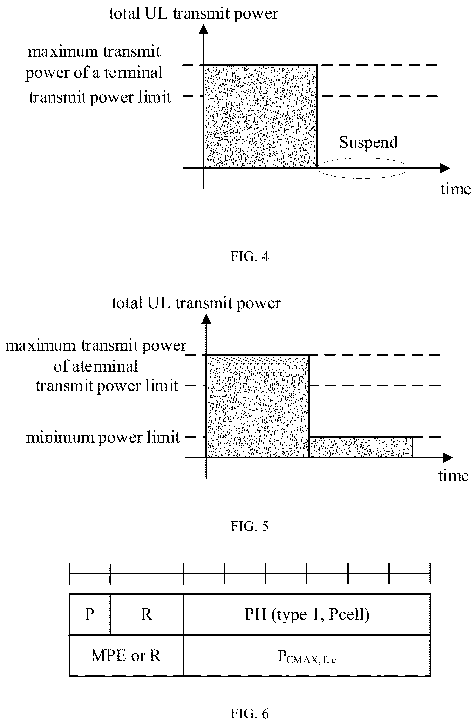

In some cases, as shown in FIG. 4, if the terminal uses the maximum transmit power to transmit UL data in some slots, to ensure that the average transmit power n UL transmission symbols corresponding to the actual UL duty cycle ratio within the UL evaluation period satisfies the transmit power limit, the terminal may not transmit the UL data during a subsequent transmission, i.e., during which the terminal suspends the transmission. Even if the terminal has data transmission demands during the transmission time, the terminal cannot continue transmitting data.

In other cases, as shown in FIG. 5, after using the maximum transmit power to transmit the UL data in some slots, the terminal may only transmit the UL data at the minimum power limit during the subsequent transmission time to ensure that the average transmit power on UL transmission symbols corresponding to the actual UL duty cycle ratio within the UL evaluation period satisfies the transmit power limit. The minimum transmit power is also referred to as the minimum transmit power limit, i.e., a minimum transmit power of the terminal when transmitting the UL data. If the transmit power is lower than the minimum transmit power limit, the terminal cannot transmit the UL data, i.e., suspending the data transmission.

According to some specifications, the terminal may use the maxUplinkDutyCycle to avoid non-CA SAR/MPE problems of high power user equipment (HPUE). For a CA case, the problem may be avoided via the UE.

Configurations of the duty cycle are provided in some protocols. In particular, for FR1, a configuration may be:
[[ maxUplinkDutyCycle-PC2-FRl ENUMERATED {n60, n70, n80, n90, n100} OPTIONAL ]]. This indicates the maxUplinkDutyCycle of the power class being PC2 in FR1, and a ratio of UL symbols occupied by the maxUplinkDutyCycle may be 60%, 70%, 80%, 90% or 100%.

For FR2, a configuration may be:
[[ maxUplinkDutyCycle-FR2 ENUMERATED {nl5, n20, n25, n30, n40, n50, n60, n70, n80, n90, n100} OPTIONAL ]]. This indicates the maxUplinkDutyCycle in FR2, and a ratio of UL symbols occupied by the maxUplinkDutyCycle may be 15%, 20%, 25%, 30%, 40%, 50%, 60%, 70%, 80%, 90% or 100%.

According to RAN 4 specifications, for example, for a terminal of PC2 (26 dBm), the probability of an actual transmit power in one band exceeding a default transmit power (23 dBm) depends on the terminal implementation, ensuring that the SAR/MPE requirement are satisfied within the UL evaluation period without exceeding the maximum UL duty cycle ratio. When the maximum UL duty cycle ratio is not exceeded within the UL evaluation period, the terminal may transmit at the maximum of 26 dBm. However, if the situation occurs where during transmissions within the UL evaluation period, the maximum UL duty cycle ratio is exceeded, the transmit power class of the terminal must fallback to PC3 (23 dBm) during the subsequent transmission time. According to RAN4 specifications in R17, the maximum transmit power for inter-band CA and inter-band evolved universal terrestrial radio access network new radio dual connectivity (EN-DC) may be a sum of the maximum output power values of the aggregated bands, which depends on similar conditions considered for the probability of exceeding the default transmit power (23 dBm) in the bands, i.e., depending on the terminal implementation, to ensure the SAR/MPE requirements are satisfied within the UL evaluation period without exceeding the maximum UL duty cycle ratio. UL transmission symbols.

Considering that actual UL transmissions controlled by the terminal may be varied with the terminal implementation, and such operations are transparent to the network device, the terminal may report an instantaneous transmit power of a physical uplink shared channel (PUSCH) transmission to the network device. For example, the instantaneous transmit power may be reported to the network device via a power headroom report (PHR). The PHR may include a power headroom (PH), a maximum transmit power P_{CMAX,f,c}, and a power management maximum power reduction (P-MPR). The PH reflects an amount of additional transmit power the terminal may deliver based on the current PUSCH power level, the P_{CMAX,f,c} reflects a maximum power the terminal may deliver in such case, and current protocols specify that the P-MPR is reported only for FR2 bands. It may be understood that the PHR provides a snapshot of a set of parameters for a specific PUSCH transmission reported to the network device.

For example, FIG. 6 is a schematic diagram illustrating a PHR format of a single carrier according to current specifications. The P indication field indicates whether the MPE is present. A reserved bit is denoted as R. Typically, no information is carried in the R and the R is mainly used to record corresponding new data if needed. The PH information corresponds to the PUSCH of the terminal (i.e., type 1) in a case of a single carrier. The PH is a PH corresponding to the primary cell (PCell). The field of MPE or R may be MPE-related information or the reserved bit. The MPE-related information is used to record P-MPR for FR2.

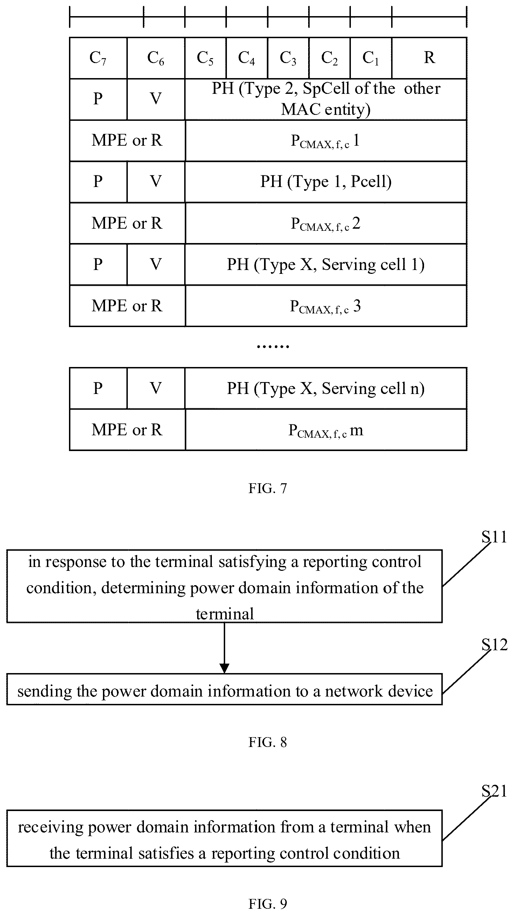

For example, FIG. 7 is a schematic diagram illustrating a PHR format of multi-carrier. C1 to C7 indicate PHRs for different carriers. It may be understood that multi-carrier PHRs may be viewed as a combination of a plurality of single carrier PHRs. Type 2 corresponds to a physical uplink control channel (PUCCH). A special cell (SpCell) may include a PCell and a primary secondary cell (PSCell). A serving cell may be the PCell, a secondary cell (SCell), a PSCell, or a SpCell.

Although reporting of the PHR informs the network device about partial power conditions of the terminal, the network device remains unaware of the reasons for actual UL transmission changes caused by the SAR/MPE requirement.

The time-varying nature of the RF exposure leads to an introduction of a new mechanism for the terminal to report the availability of a time-varying transmit power to the network device. In some solutions, the terminal may periodically report an available energy to the network device via an accompanying PHR, an energy headroom report (EHR) sent independently or an energy availability report (EAR) sent independently to the network device. For different component carriers (CCs), the terminal operates in different transmit power limits for UL transmissions. The magnitude of UL transmission capability for a remaining time within the evaluation window is determined by the accumulated power before the slot of reporting via the PHR within a ratio of transmission symbols corresponding to the actual UL duty cycle in the UL evaluation period. This reporting may support that the network device is aware of the impact on subsequent transmissions of the terminal due to the SAR/MPE requirement in a newly defined way.

In R18 research, UL coverage is always one of the bottlenecks for system performance, affecting signal quality and user experience. There exists a strong demand from operators for UL coverage enhancement. In coverage enhancement (CE) research of R18, power domain enhancements are a critical topic, which has direct improvements to both coverage and spectral efficiency (SE).

In UL CA/DC implementations of a new radio (NR), the maximum transmit power defined on a band combination (BC) is subject to the transmit power class of the terminal defined on the BC. RAN4 enhancements of R17 support the HPUE to better utilize an independent PA of the terminal to achieve higher transmit power, primarily improving a configuration for PC2+PC3.

When the terminal performs the actual UL transmission, FR1 is subject to the SAR requirement, and FR2 is subject to the MPE requirement, resulting in a limitation on the actual transmit power. The transmit power adjustment based on the SAR/MPE requirement may cause significant fluctuations or interruptions in the transmit power. According to RAN4 protocol agreements, the terminal defines such implementation remains transparent to the network device. The power limitations, power adjustments, and whether the HPUE may achieve high-power transmissions significantly affect scheduling of the network device, and may directly affect practical effects of application deployment in the network device for R17 enhancements. Enabling the network device to obtain power-related information of the terminal and understand corresponding terminal behaviors supports better scheduling decisions by the network device.

It is clear that how to implement reporting of the power domain information and corresponding mechanisms and signaling remains a problem that needs to be solved. It may be understood that the problem in the disclosure are not limited to NR-UL CA/DC.

Therefore, in the disclosure, the terminal may send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

FIG. 8 is a flowchart illustrating a method for reporting power information according to an exemplary embodiment. As shown in FIG. 8, the method is applied to a terminal and may include the following steps S11 to S12.

At step S11, in response to the terminal satisfying a reporting control condition, power domain information of the terminal is determined.

In some embodiments, in response to the terminal satisfying the reporting control condition, the terminal may determine the power domain information of the terminal. The power domain information describes information related to a power of the terminal.

At step S12, the power domain information is sent to a network device.

In some embodiments, the terminal may send the power domain information determined in S11 to the network device.

It may be understood that power domain information may be enhanced power information. It may be further understood that compared to conventional power information, the enhanced power information may be applicable to FR1 scenarios, and the conventional power information may be only applicable to FR2 scenarios. Specific reference may be made to the related art, and the disclosure is not limited herein.

Sending by the terminal the power domain information to the network device when the terminal satisfies the reporting control condition may be regarded as a support from the terminal for an enhanced reporting of the power domain information.

In the disclosure, the terminal may send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in embodiments of the disclosure, the reporting control condition includes at least one of: a predefined period timer, the period timer indicating the terminal to send the power domain information to the network device according to a preset period; a predefined prohibition timer, the prohibition timer indicating the terminal not to send the power domain information within a specified time period, so as to prevent the terminal from reporting too frequently; a transmission interruption within a UL duty cycle caused by an SAR or an MPE; a subsequent transmission power reduction corresponding to an estimated remaining transmission time within the UL duty cycle caused by the SAR or the MPE; a power class change that occurs on at least one carrier within the UL duty cycle caused by the SAR or the MPE; a prediction change of the UL duty cycle or a configuration change of the UL duty cycle; a power class fallback caused by a power-saving requirement; or a channel change-related trigger condition.

In some embodiments, the reporting control condition may include the predefined period timer. The predefined period timer indicates the terminal to send the power domain information to the network device according to the preset period.

For example, the predefined period timer may be a newly defined period timer, which may differ from the period timer in the PHR.

For example, based on the predefined period timer, the terminal may periodically trigger enhanced reporting of the power domain information (e.g., remaining power, remaining energy, or other power domain information of the terminal) one or more times on UL transmission symbols corresponding to a UL transmission symbol ratio for the actual UL duty cycle within a UL evaluation period. It may be understood that "the UL transmission symbols corresponding to the UL transmission symbol ratio for the actual UL duty cycle within the UL evaluation period" refers to UL transmission symbols corresponding to a UL transmission symbol ratio configured for the actual UL duty cycle of the terminal within the UL evaluation period, for example, UL transmission symbols corresponding to 80% if the UL transmission symbol ratio configured for the actual UL duty cycle of the terminal is 80%.

In some embodiments, the reporting control condition may include the predefined prohibition timer. The prohibition timer indicates the terminal not to send the power domain information within a specified time period.

For example, the predefined prohibition timer may be a newly defined prohibition timer, which may differ from the prohibition timer in the PHR. Alternatively, the prohibition timer in the PHR may be reused as the predefined prohibition timer.

It may be understood that the prohibition timer is configured to perform the reporting control to prevent from reporting the power domain information too frequently.

In some embodiments, the reporting control condition may include the transmission interruption within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in transmission interruption (e.g., as shown in FIG. 4). The terminal may determine the power domain information of the terminal and report the power domain information to the network device.

The maximum UL duty cycle may be configured by the network device. Alternatively, it is considered that in future enhancements, the terminal performs measurements and report the result to the network device. The actual UL duty cycle of the terminal within the UL evaluation period depends on the terminal implementation, which is not limited in the disclosure.

In some embodiments, the reporting control condition may include the subsequent transmission power reduction corresponding to the estimated remaining transmission time within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in the subsequent transmission power reduction corresponding to the estimated remaining transmission time. For example, the reduction may be a power reduction or an energy reduction (e.g., as shown in FIG. 5). The terminal may determine the power domain information of the terminal and report the power domain information to the network device.

In some embodiments, the reporting control condition may include the power class change that occurs on the at least one carrier within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in insufficient power and thus the power class fallback that occurs on the at least one carrier, or resulting in sufficient remaining power and thus a power class elevation that occurs on the at least one carrier.

In some embodiments, the reporting control condition may include the prediction change of the UL duty cycle or the configuration change of the UL duty cycle.

The prediction change of the UL duty cycle or the configuration change of the UL duty cycle may be a change of the UL evaluation period corresponding to the actual UL duty cycle within the UL evaluation period or a change of the UL transmission symbol ratio for the actual UL duty cycle within the UL evaluation period.

In some embodiments, the reporting control condition may include the power class fallback caused by the power-saving requirement.

In some embodiments, the reporting control condition may include the channel change-related trigger condition.

For example, the channel change-related trigger condition may be a change of any possible information related to the channel (e.g., channel bandwidth, channel switching, path loss, etc.), which is not limited in the disclosure.

In some embodiments, the reporting control condition may further include any two, three, four, five, six, seven, or eight of the above conditions. For example, the reporting control condition may further include: the predefined period timer, the predefined prohibition timer; or the predefined period timer, the transmission interruption within the UL duty cycle caused by the SAR or the MPE; or the transmission interruption within the UL duty cycle caused by the SAR or the MPE, the subsequent transmission power reduction corresponding to the estimated remaining transmission time within the UL duty cycle caused by the SAR or the MPE; or the predefined period timer, the subsequent transmission power reduction corresponding to the estimated remaining transmission time within the UL duty cycle caused by the SAR or the MPE, the prediction change of the UL duty cycle or the configuration change of the UL duty cycle; or the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle, the power class fallback caused by the power-saving requirement; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle, the power class fallback caused by the power-saving requirement, the channel change-related trigger condition.

It should be understood that the reporting control condition may further include any two, three, four, five, six, seven, or eight of the above condition, which are not exhaustively enumerated in the disclosure. For brevity, further details of the disclosure will not be repeated herein.

The disclosure provides a plurality of reporting control conditions, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided by the embodiments of the disclosure, in response to the reporting control condition being the subsequent transmission power reduction corresponding to the estimated remaining transmission time within the UL duty cycle caused by the SAR or the MPE, satisfying the reporting control condition in S11 may include at least one of: a transmit power of the terminal for a subsequent UL transmission corresponding to the estimated remaining transmission time within the UL duty cycle being less than a transmit power threshold; or a remaining energy of the terminal for a subsequent UL transmission corresponding to the estimated remaining transmission time within the UL duty cycle being less than an energy threshold.

In some embodiments, in response to the reporting control condition being the subsequent transmission power reduction corresponding to the estimated remaining transmission time within the UL duty cycle caused by the SAR or the MPE, satisfying the reporting condition may include: the transmit power of the terminal for the subsequent UL transmission corresponding to the estimated remaining transmission time within the UL duty cycle being less than the transmit power threshold.

For example, if, on the UL transmission symbols corresponding to the actual UL duty cycle ratio within the UL evaluation period, the transmit power of the terminal for the subsequent UL transmission corresponding to the estimated remaining transmission time is less than the transmit power threshold, the probability of subsequent transmission interruption or transmit power fallback is relatively high. Thus, reporting of the related power domain information may be triggered.

The transmit power threshold may be predefined, or configured by the network device, or specified by the protocol agreements, which is not limited in the disclosure.

In some embodiments, in response to the reporting control condition being the subsequent transmission power reduction corresponding to the estimated remaining transmission time within the UL duty cycle caused by the SAR or the MPE, satisfying the reporting condition may include: the remaining energy of the terminal for the subsequent UL transmission corresponding to the estimated remaining transmission time within the UL duty cycle being less than the energy threshold.

For example, if, on the UL transmission symbols corresponding to the UL transmission symbol ratio of the actual UL duty cycle within the UL evaluation period, UL remaining energy of the terminal for subsequent UL transmission corresponding to the estimated remaining transmission time is less than the energy threshold, the probability of subsequent transmission interruption or transmit power fallback is relatively high. Thus, reporting of the related power domain information may be triggered.

The energy threshold may be predefined, or configured by the network device, or specified by the protocol agreements, which is not limited in the disclosure.

In some embodiments, satisfying the reporting control condition may include: the transmit power of the terminal for the subsequent UL transmission corresponding to the estimated remaining transmission time within the UL duty cycle being less than the transmit power threshold; and the remaining energy of the terminal for the subsequent UL transmission corresponding to the estimated remaining transmission time within the UL duty cycle being less than the energy threshold.

In the disclosure, the terminal is triggered to report the power domain information via the corresponding threshold, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the power class change that occurs on at least one carrier within the UL duty cycle caused by the SAR or the MPE, satisfying the reporting control condition in S11 may include at least one of: in a plurality of carriers of CA/DC, the power class fallback existing on at least one carrier during a transmitted time within the UL duty cycle; or in a plurality of carriers of CA/DC, the power class fallback existing on at least one carrier during the estimated remaining transmission time within the UL duty cycle.

In some embodiments, in response to the reporting control condition being the power class change that occurs on at least one carrier within the UL duty cycle caused by the SAR or the MPE, satisfying the reporting condition may include: in the plurality of carriers of CA/DC, the power class fallback existing on at least one carrier during the transmitted time within the UL duty cycle.

For example, if, on the UL transmission symbols corresponding to the UL transmission symbol ratio of the actual UL duty cycle within the UL evaluation period, the power class fallback occurs on one or more carriers during the transmitted time, then the terminal may be triggered to determine the power domain information and report the power domain information to the network device.

In some embodiments, in response to the reporting control condition being the power class change that occurs on at least one carrier within the UL duty cycle caused by the SAR or the MPE, satisfying the reporting condition may include: in the plurality of carriers of CA/DC, the power class fallback existing on the at least one carrier during the estimated remaining transmission time within the UL duty cycle.

For example, if, on the UL transmission symbols corresponding to the UL transmission symbol ratio of the actual UL duty cycle within the UL evaluation period, during the estimated remaining transmission time except for the transmitted time, it is possible that the power class fallback subsequently exists on one or more carriers, then the terminal may be triggered to determine the power domain information and report the power domain information to the network device.

In some embodiments, satisfying the reporting control condition may include: in the plurality of carriers of CA/DC, the power class fallback existing on the at least one carrier during the transmitted time within the UL duty cycle; and in the plurality of carriers of CA/DC, the power class fallback existing on the at least one carrier during the estimated remaining transmission time within the UL duty cycle.

In the disclosure, the terminal may be triggered to report the power domain information via the power class fallback existing on the at least one carrier, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the prediction change of the UL duty cycle or the configuration change of the UL duty cycle, satisfying the reporting control condition in S11 may include at least one of: readjusting, by the terminal, the UL duty cycle based on a change in the SAR or the MPE; or adjusting, by the terminal, the UL duty cycle based on a service transmission requirement.

In some embodiments, in response to the reporting control condition being the prediction change of the UL duty cycle or the configuration change of the UL duty cycle, satisfying the reporting control condition may include: readjusting, by the terminal, the UL duty cycle based on the change in the SAR or the MPE.

For example, when the SAR or the MPE changes, the terminal needs to readjust a more appropriate UL duty cycle, such as adjusting the UL evaluation period and/or the actual UL duty cycle value (i.e., a ratio of corresponding UL transmission symbols to the UL transmission symbols) within the UL evaluation period. Thus, the terminal may be triggered to determine the power domain information and report the power domain information to the network device.

The change in the SAR or the MPE may be a change in the SAR or the MPE measured by a sensor of the terminal, or a significant change in the SAR or the MPE. The significant change may mean that the SAR or the MPE is greater than a predefined SAR threshold or MPE threshold.

In some embodiments, in response to the reporting control condition being the prediction change of the UL duty cycle or the configuration change of the UL duty cycle, satisfying the reporting control condition may include: adjusting, by the terminal, the UL duty cycle based on the service transmission requirement.

For example, under the current SAR or MPE requirement, a more appropriate UL duty cycle may be obtained by readjusting based on service transmission requirements, such as adjusting the UL evaluation period and/or the actual UL duty cycle value (i.e., a ratio of corresponding UL transmission symbols to the UL transmission symbols) within the UL evaluation period. Thus, the terminal may be triggered to determine the power domain information and report the power domain information to the network device.

In some embodiments, satisfying the reporting control condition may include: readjusting, by the terminal, the UL duty cycle based on the change in the SAR or the MPE; and adjusting, by the terminal, the UL duty cycle based on the service transmission requirement.

In the disclosure, the terminal may be triggered to report the power domain information via the change of the UL duty cycle, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the channel change-related trigger condition, satisfying the reporting control condition in S11 includes: a path loss change value being greater than a preset path loss threshold.

In some embodiments, in response to the reporting control condition being the channel change-related trigger condition, satisfying the reporting control condition may include: the path loss change value being greater than the preset path loss threshold.

For example, when a path loss of the channel changes significantly, such as when the path loss change value exceeds a predefined path loss threshold, the terminal may be triggered to determine the power domain information and report the power domain information to the network device.

It should be understood that if other parameters of the channel change, they may be compared with corresponding thresholds to determine whether to trigger reporting of the power domain information, which is not limited in the disclosure.

In the disclosure, the terminal may be triggered to report the power domain information via the change of the path loss, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, the power domain information includes at least one of: power headroom information of the terminal; energy headroom information of the terminal; maximum transmit power information of the terminal; power class information of the terminal on different carriers; power fallback information of the terminal on different carriers; current transmit power information of the terminal; or maximum duty cycle information or duty cycle information of the terminal.

In some embodiments, the power domain information may include the power headroom information of the terminal.

In some embodiments, the power domain information may include the energy headroom information of the terminal.

In some embodiments, the power domain information may include the maximum transmit power information of the terminal.

In some embodiments, the power domain information may include the power class information of the terminal on different carriers.

In some embodiments, the power domain information may include the power fallback information of the terminal on different carriers.

In some embodiments, the power domain information may include the current transmit power information of the terminal.

In some embodiments, the power domain information may include information of a maxUplinkDutyCycle or a UL duty cycle of the terminal. The UL duty cycle represents the actual UL duty cycle within the UL evaluation period, including, for example, the UL evaluation period and the UL transmission symbol ratio corresponding to the actual UL transmission.

It may be understood that the above-mentioned information may be recorded in the PHR, or in the EHR or the EAR, which is not limited in the disclosure.

In some embodiments, the power domain information may include any two, three, four, five, six, or seven of the above information. For example, the power domain information includes: the power headroom information of the terminal and the maximum transmit power information of the terminal; or the power headroom information of the terminal and the power class information of the terminal on different carriers; or the power headroom information of the terminal and the maximum duty cycle information or duty cycle information of the terminal; or the energy headroom information of the terminal, the maximum transmit power information of the terminal, and the maximum duty cycle information or duty cycle information of the terminal; or the power headroom information of the terminal, the power fallback information of the terminal on different carriers, and the current transmit power information of the terminal; or the power headroom information of the terminal, the maximum transmit power information of the terminal, the power class information of the terminal on different carriers, and the maximum duty cycle information or duty cycle information of the terminal; or the energy headroom information of the terminal, the maximum transmit power information of the terminal, the power class information of the terminal on different carriers, the power fallback information of the terminal on different carriers, and the maximum duty cycle information or duty cycle information of the terminal; or the energy headroom information of the terminal, the maximum transmit power information of the terminal, the power class information of the terminal on different carriers, the power fallback information of the terminal on different carriers, the current transmit power information of the terminal, and the maximum duty cycle information or duty cycle information of the terminal; or the power headroom information of the terminal, the energy headroom information of the terminal, maximum transmit power information of the terminal, the power class information of the terminal on different carriers, the power fallback information of the terminal on different carriers, the current transmit power information of the terminal, and the maximum duty cycle information or duty cycle information of the terminal.

It may be understood that the power domain information may also include any two, three, four, five, six, or seven of the above information, which are not exhaustively enumerated in the disclosure. For brevity, further details of the disclosure will not be repeated herein.

The disclosure provides a plurality of types of information included in the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, the power domain information is carried in any one of: a media access control (MAC) control element (CE) signaling for carrying a PHR; or a newly added MAC CE signaling for carrying the power domain information.

In some embodiments, the power domain information may be carried in the MAC CE signaling for carrying the PHR.

It may be understood that the MAC CE signaling carrying the PHR is reused by the power domain information .

In some embodiments, the power domain information may be carried in the newly added MAC CE signaling for carrying the power domain information.

For example, a MAC CE signaling may be newly defined. The newly defined MAC CE signaling is specifically used to carry the power domain information involved in the disclosure. It may be understood that the newly defined MAC CE signaling is different from the MAC CE signaling carrying the PHR.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition not including a period timer and a prohibition timer, the power domain information may be carried in any one of: uplink control information (UCI); or a radio resource control (RRC) signaling.

In some embodiments, in response to the reporting control condition not including the period timer and the prohibition timer, the power domain information may be carried in the UCI.

In some embodiments, in response to the reporting control condition not including the period timer and the prohibition timer, the power domain information may be carried in the RRC.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

Based on the same concept, the disclosure also provides a method of reporting power information applied to a network device.

FIG. 9 is a flowchart illustrating a method for reporting power information according to an exemplary embodiment. As shown in FIG. 9, the method is applied to a network device and may include the following step S21.

At step S21, power domain information is received from a terminal when the terminal satisfies a reporting control condition.

In some embodiments, the network device may receive the power domain information from the terminal. The power domain information describes information related to a power of the terminal.

For example, the power domain information may be determined by the terminal in response to the terminal satisfying the reporting control condition of the terminal.

It may be understood that power domain information may be enhanced power information. It may be further understood that compared to conventional power information, the enhanced power information may be applicable to FR1 scenarios, and the conventional power information may be only applicable to FR2 scenarios. Specific reference may be made to the related art, and the disclosure is not limited herein.

Receiving by the network device the power domain information from the terminal when the terminal satisfies the reporting control condition may be regarded as a support from the terminal for an enhanced reporting of the power domain information.

In the disclosure, the network device may receive the power domain information from the terminal that satisfies the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in embodiments of the disclosure, the reporting control condition includes at least one of: a predefined period timer, the period timer indicating the terminal to send the power domain information to the network device according to a preset period; a predefined prohibition timer, the prohibition timer indicating the terminal not to send the power domain information within a specified time period, so as to prevent the terminal from reporting too frequently; a transmission interruption within a UL duty cycle caused by an SAR or an MPE; a subsequent transmission power reduction corresponding to an estimated remaining transmission time within the UL duty cycle caused by the SAR or the MPE; a power class change that occurs on at least one carrier within the UL duty cycle caused by the SAR or the MPE; a prediction change of the UL duty cycle or a configuration change of the UL duty cycle; a power class fallback caused by a power-saving requirement; or a channel change-related trigger condition.

In some embodiments, the reporting control condition may include the predefined period timer. The predefined period timer indicates the terminal to send the power domain information to the network device according to the preset period.

For example, the predefined period timer may be a newly defined period timer, which may differ from the period timer in the PHR.

For example, based on the predefined period timer, the terminal may periodically trigger enhanced reporting of the power domain information (e.g., remaining power, remaining energy, or other power domain information of the terminal) one or more times on UL transmission symbols corresponding to a UL transmission symbol ratio for the actual UL duty cycle within a UL evaluation period.

In some embodiments, the reporting control condition may include the predefined prohibition timer. The prohibition timer indicates the terminal not to send the power domain information within a specified time period.

For example, the predefined prohibition timer may be a newly defined prohibition timer, which may differ from the prohibition timer in the PHR. Alternatively, the prohibition timer in the PHR may be reused as the predefined prohibition timer.

It may be understood that the prohibition timer is configured to perform the reporting control to prevent from reporting the power domain information too frequently.

In some embodiments, the reporting control condition may include the transmission interruption within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in transmission interruption(e.g., as shown in FIG. 4). The terminal may determine the power domain information of the terminal and report the power domain information to the network device.

The maximum UL duty cycle may be configured by the network device. Alternatively, it is considered that in future enhancements, the terminal performs measurements and report the result to the network device. The actual UL duty cycle of the terminal within the UL evaluation period depends on the terminal implementation, which is not limited in the disclosure.

In some embodiments, the reporting control condition may include the subsequent transmission power reduction corresponding to the estimated remaining transmission time within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in the subsequent transmission power reduction corresponding to the estimated remaining transmission time. For example, the reduction may be a power reduction or an energy reduction (e.g., as shown in FIG. 5). The terminal may determine the power domain information of the terminal and report the power domain information to the network device.

In some embodiments, the reporting control condition may include the power class change that occurs on the at least one carrier within the UL duty cycle caused by the SAR or the MPE.

For example, the terminal, based on the SAR or MPE requirement, ensures that the average transmit power on the UL transmission symbols corresponding to the UL transmission symbol ratio for the actual UL duty cycle within the UL evaluation period sanctifies the SAR or MPE requirement, resulting in insufficient power and thus the power class fallback that occurs on the at least one carrier, or resulting in sufficient remaining power and thus a power class elevation that occurs on the at least one carrier.

In some embodiments, the reporting control condition may include the prediction change of the UL duty cycle or the configuration change of the UL duty cycle.

The prediction change of the UL duty cycle or the configuration change of the UL duty cycle may be a change of the UL evaluation period corresponding to the actual UL duty cycle within the UL evaluation period or a change of the UL transmission symbol ratio for the actual UL duty cycle within the UL evaluation period.

In some embodiments, the reporting control condition may include the power class fallback caused by the power-saving requirement.

In some embodiments, the reporting control condition may include the channel change-related trigger condition.

For example, the channel change-related trigger condition may be a change of any possible information related to the channel (e.g., channel bandwidth, channel switching, path loss, etc.), which is not limited in the disclosure.

In some embodiments, the reporting control condition may further include any two, three, four, five, six, seven, or eight of the above conditions. For example, the reporting control condition may further include: the predefined period timer, the predefined prohibition timer; or the predefined period timer, the transmission interruption within the UL duty cycle caused by the SAR or the MPE; or the transmission interruption within the UL duty cycle caused by the SAR or the MPE, the subsequent transmission power reduction corresponding to the estimated remaining transmission time within the UL duty cycle caused by the SAR or the MPE; or the predefined period timer, the subsequent transmission power reduction corresponding to the estimated remaining transmission time within the UL duty cycle caused by the SAR or the MPE, the prediction change of the UL duty cycle or the configuration change of the UL duty cycle; or the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle, the power class fallback caused by the power-saving requirement; or the predefined period timer, the predefined prohibition timer, the transmission interruption within the UL duty cycle caused by the SAR or the MPE, the subsequent transmission power reduction corresponding to the estimated remaining transmission time within the UL duty cycle caused by the SAR or the MPE, the power class change that occurs on at least one carrier within the UL duty cycle caused by the SAR or the MPE, the prediction change of the UL duty cycle or the configuration change of the UL duty cycle, the power class fallback caused by the power-saving requirement, the channel change-related trigger condition.

It should be understood that the reporting control condition may further include any two, three, four, five, six, seven, or eight of the above condition, which are not exhaustively enumerated in the disclosure. For brevity, further details of the disclosure will not be repeated herein.

The disclosure provides a plurality of reporting control conditions, enabling the network device to receive the power domain information from the terminal that satisfies the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided by the embodiments of the disclosure, in response to the reporting control condition being the subsequent transmission power reduction corresponding to the estimated remaining transmission time within the UL duty cycle caused by the SAR or the MPE, satisfying the reporting control condition in S11 may include at least one of: a transmit power of the terminal for a subsequent UL transmission corresponding to the estimated remaining transmission time within the UL duty cycle being less than a transmit power threshold; or a remaining energy of the terminal for a subsequent UL transmission corresponding to the estimated remaining transmission time within the UL duty cycle being less than an energy threshold.

In some embodiments, in response to the reporting control condition being the subsequent transmission power reduction corresponding to the estimated remaining transmission time within the UL duty cycle caused by the SAR or the MPE, satisfying the reporting condition may include: the transmit power of the terminal for the subsequent UL transmission corresponding to the estimated remaining transmission time within the UL duty cycle being less than the transmit power threshold.

For example, if, on the UL transmission symbols corresponding to the actual UL duty cycle ratio within the UL evaluation period, the transmit power of the terminal for the subsequent UL transmission corresponding to the estimated remaining transmission time is less than the transmit power threshold, the probability of subsequent transmission interruption or transmit power fallback is relatively high. Thus, reporting of the related power domain information may be triggered.

The transmit power threshold may be predefined, or configured by the network device, or specified by the protocol agreements, which is not limited in the disclosure.

In some embodiments, in response to the reporting control condition being the subsequent transmission power reduction corresponding to the estimated remaining transmission time within the UL duty cycle caused by the SAR or the MPE, satisfying the reporting condition may include: the remaining energy of the terminal for the subsequent UL transmission corresponding to the estimated remaining transmission time within the UL duty cycle being less than the energy threshold.

For example, if, on the UL transmission symbols corresponding to the UL transmission symbol ratio of the actual UL duty cycle within the UL evaluation period, UL remaining energy of the terminal for subsequent UL transmission corresponding to the estimated remaining transmission time is less than the energy threshold, the probability of subsequent transmission interruption or transmit power fallback is relatively high. Thus, reporting of the related power domain information may be triggered.

The energy threshold may be predefined, or configured by the network device, or specified by the protocol agreements, which is not limited in the disclosure.

In some embodiments, satisfying the reporting control condition may include: the transmit power of the terminal for the subsequent UL transmission corresponding to the estimated remaining transmission time within the UL duty cycle being less than the transmit power threshold; and the remaining energy of the terminal for the subsequent UL transmission corresponding to the estimated remaining transmission time within the UL duty cycle being less than the energy threshold.

In the disclosure, the terminal may be triggered to report the power domain information via the corresponding threshold, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the power class change that occurs on at least one carrier within the UL duty cycle caused by the SAR or the MPE, satisfying the reporting control condition in S11 may include at least one of: in a plurality of carriers of CA/DC, the power class fallback existing on at least one carrier during a transmitted time within the UL duty cycle; or in a plurality of carriers of CA/DC, the power class fallback existing on at least one carrier during the estimated remaining transmission time within the UL duty cycle.

In some embodiments, in response to the reporting control condition being the power class change that occurs on at least one carrier within the UL duty cycle caused by the SAR or the MPE, satisfying the reporting condition may include: in the plurality of carriers of CA/DC, the power class fallback existing on at least one carrier during the transmitted time within the UL duty cycle.

For example, if, on the UL transmission symbols corresponding to the UL transmission symbol ratio of the actual UL duty cycle within the UL evaluation period, the power class fallback occurs on one or more carriers during the transmitted time, then the terminal may be triggered to determine the power domain information and report the power domain information to the network device.

In some embodiments, in response to the reporting control condition being the power class change that occurs on at least one carrier within the UL duty cycle caused by the SAR or the MPE, satisfying the reporting condition may include: in the plurality of carriers of CA/DC, the power class fallback existing on the at least one carrier during the estimated remaining transmission time within the UL duty cycle.

For example, if, on the UL transmission symbols corresponding to the UL transmission symbol ratio of the actual UL duty cycle within the UL evaluation period, during the estimated remaining transmission time except for the transmitted time, it is possible that the power class fallback subsequently exists on one or more carriers, then the terminal may be triggered to determine the power domain information and report the power domain information to the network device.

In some embodiments, satisfying the reporting control condition may include: in the plurality of carriers of CA/DC, the power class fallback existing on the at least one carrier during the transmitted time within the UL duty cycle; and in the plurality of carriers of CA/DC, the power class fallback existing on the at least one carrier during the estimated remaining transmission time within the UL duty cycle.

In the disclosure, the terminal may be triggered to report the power domain information via the power class fallback existing on the at least one carrier, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the prediction change of the UL duty cycle or the configuration change of the UL duty cycle, satisfying the reporting control condition in S11 may include at least one of: readjusting, by the terminal, the UL duty cycle based on a change in the SAR or the MPE; or adjusting, by the terminal, the UL duty cycle based on a service transmission requirement.

In some embodiments, in response to the reporting control condition being the prediction change of the UL duty cycle or the configuration change of the UL duty cycle, satisfying the reporting control condition may include: readjusting, by the terminal, the UL duty cycle based on the change in the SAR or the MPE.

For example, when the SAR or the MPE changes, the terminal needs to readjust a more appropriate UL duty cycle, such as adjusting the UL evaluation period and/or the actual UL duty cycle value (i.e., a ratio of corresponding UL transmission symbols to the UL transmission symbols) within the UL evaluation period. Thus, the terminal may be triggered to determine the power domain information and report the power domain information to the network device.

The change in the SAR or the MPE may be a change in the SAR or the MPE measured by a sensor of the terminal, or a significant change in the SAR or the MPE. The significant change may mean that the SAR or the MPE is greater than a predefined SAR threshold or MPE threshold.

In some embodiments, in response to the reporting control condition being the prediction change of the UL duty cycle or the configuration change of the UL duty cycle, satisfying the reporting control condition may include: adjusting, by the terminal, the UL duty cycle based on the service transmission requirement.

For example, under the current SAR or MPE requirement, a more appropriate UL duty cycle may be obtained by readjusting based on service transmission requirements, such as adjusting the UL evaluation period and/or the actual UL duty cycle value (i.e., a ratio of corresponding UL transmission symbols to the UL transmission symbols) within the UL evaluation period. Thus, the terminal may be triggered to determine the power domain information and report the power domain information to the network device.

In some embodiments, satisfying the reporting control condition may include: readjusting, by the terminal, the UL duty cycle based on the change in the SAR or the MPE; and adjusting, by the terminal, the UL duty cycle based on the service transmission requirement.

In the disclosure, the terminal may be triggered to report the power domain information via the change of the UL duty cycle, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition being the channel change-related trigger condition, satisfying the reporting control condition in S11 includes: a path loss change value being greater than a preset path loss threshold.

In some embodiments, in response to the reporting control condition being the channel change-related trigger condition, satisfying the reporting control condition may include: the path loss change value being greater than the preset path loss threshold.

For example, when a path loss of the channel changes significantly, such as when the path loss change value exceeds a predefined path loss threshold, the terminal may be triggered to determine the power domain information and report the power domain information to the network device.

It should be understood that if other parameters of the channel change, they may be compared with corresponding thresholds to determine whether to trigger reporting of the power domain information, which is not limited in the disclosure.

In the disclosure, the terminal may be triggered to report the power domain information via the change of the path loss, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, the power domain information includes at least one of: power headroom information of the terminal; energy headroom information of the terminal; maximum transmit power information of the terminal; power class information of the terminal on different carriers; power fallback information of the terminal on different carriers; current transmit power information of the terminal; or maximum duty cycle information or duty cycle information of the terminal.

In some embodiments, the power domain information may include the power headroom information of the terminal.

In some embodiments, the power domain information may include the energy headroom information of the terminal.

In some embodiments, the power domain information may include the maximum transmit power information of the terminal.

In some embodiments, the power domain information may include the power class information of the terminal on different carriers.

In some embodiments, the power domain information may include the power fallback information of the terminal on different carriers.

In some embodiments, the power domain information may include the current transmit power information of the terminal.

In some embodiments, the power domain information may include information of a maxUplinkDutyCycle or a UL duty cycle of the terminal. The UL duty cycle represents the actual UL duty cycle within the UL evaluation period, including, for example, the UL evaluation period and the UL transmission symbol ratio corresponding to the actual UL transmission.

It may be understood that the above-mentioned information may be recorded in the PHR, or in the EHR or the EAR, which is not limited in the disclosure.

In some embodiments, the power domain information may include any two, three, four, five, six, or seven of the above information. For example, the power domain information includes: the power headroom information of the terminal and the maximum transmit power information of the terminal; or the power headroom information of the terminal and the power class information of the terminal on different carriers; or the power headroom information of the terminal and the maximum duty cycle information or duty cycle information of the terminal; or the energy headroom information of the terminal, the maximum transmit power information of the terminal, and the maximum duty cycle information or duty cycle information of the terminal; or the power headroom information of the terminal, the power fallback information of the terminal on different carriers, and the current transmit power information of the terminal; or the power headroom information of the terminal, the maximum transmit power information of the terminal, the power class information of the terminal on different carriers, and the maximum duty cycle information or duty cycle information of the terminal; or the energy headroom information of the terminal, the maximum transmit power information of the terminal, the power class information of the terminal on different carriers, the power fallback information of the terminal on different carriers, and the maximum duty cycle information or duty cycle information of the terminal; or the energy headroom information of the terminal, the maximum transmit power information of the terminal, the power class information of the terminal on different carriers, the power fallback information of the terminal on different carriers, the current transmit power information of the terminal, and the maximum duty cycle information or duty cycle information of the terminal; or the power headroom information of the terminal, the energy headroom information of the terminal, maximum transmit power information of the terminal, the power class information of the terminal on different carriers, the power fallback information of the terminal on different carriers, the current transmit power information of the terminal, and the maximum duty cycle information or duty cycle information of the terminal.

It may be understood that the power domain information may also include any two, three, four, five, six, or seven of the above information, which are not exhaustively enumerated in the disclosure. For brevity, further details of the disclosure will not be repeated herein.

The disclosure provides a plurality of types of information included in the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, the power domain information is carried in any one of: an MAC CE signaling for carrying a PHR; or a newly added MAC CE signaling for carrying the power domain information.

In some embodiments, the power domain information may be carried in the MAC CE signaling for carrying the PHR.

It may be understood that the MAC CE signaling carrying the PHR is reused by the power domain information .

In some embodiments, the power domain information may be carried in the newly added MAC CE signaling for carrying the power domain information.

For example, a MAC CE signaling may be newly defined. The newly defined MAC CE signaling is specifically used to carry the power domain information involved in the disclosure. It may be understood that the newly defined MAC CE signaling is different from the MAC CE signaling carrying the PHR.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In the method for reporting power information provided in the embodiments of the disclosure, in response to the reporting control condition not including a period timer and a prohibition timer, the power domain information may be carried in any one of: UCI; or an RRC signaling.

In some embodiments, in response to the reporting control condition not including the period timer and the prohibition timer, the power domain information may be carried in the UCI.

In some embodiments, in response to the reporting control condition not including the period timer and the prohibition timer, the power domain information may be carried in the RRC.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

It should be noted that, those skilled in the art may understand that various embodiments/examples of implementation involved above in the embodiments of the disclosure may be used in combination with the embodiments described above or may be used independently. The principle of implementation is similar whether used independently or in combination with the embodiments described above. In the disclosure, some of the embodiments are illustrated as embodiments used together. Those skilled in the art may understand that such an illustrative description is not a limitation of the embodiments of the disclosure.

Based on the same idea, embodiments of the disclosure also provides an apparatus for reporting power information and a device for reporting power information.

It may be understood that the apparatus for reporting power information and the device for reporting power information provided in the embodiments of the disclosure includes, in order to realize the above-described functions, a hardware structure and/or a software module corresponding to the implementation of each function. In combination with the units and algorithmic steps of the various examples disclosed in the embodiments of the disclosure, the embodiments of the disclosure are capable of being realized in the form of the hardware or a combination of the hardware and a computer software. Whether a particular function is performed in the form of the hardware or in the form of computer software driving the hardware depends on a particular application and design constraints of a technical solution. Those skilled in the art may use different ways to implement the described functions for each particular application, but such implementations should not be considered outside the scope of the technical solutions according to the embodiments of the disclosure.

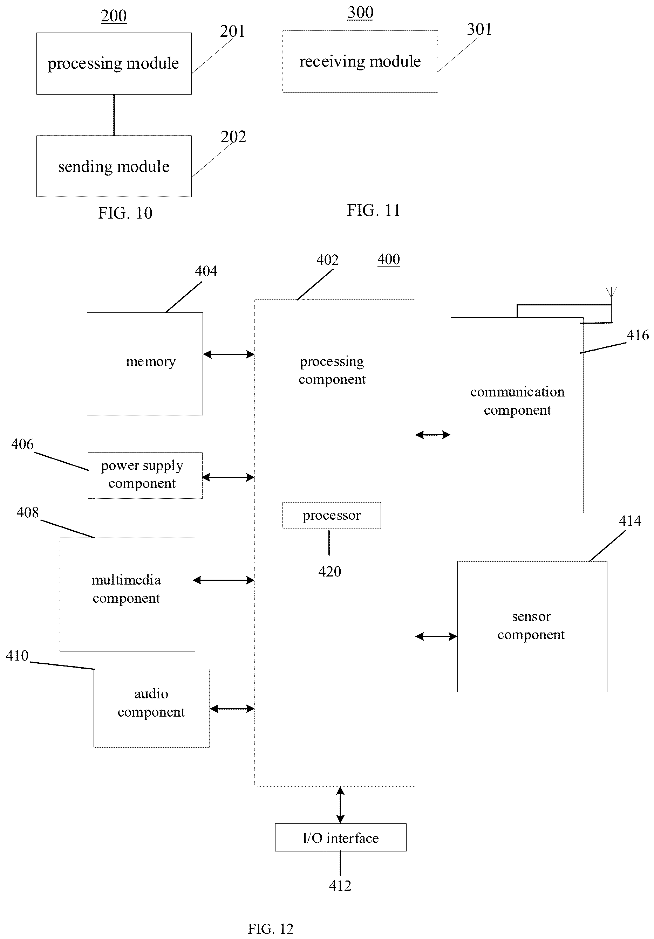

FIG. 10 is a block diagram illustrating an apparatus for reporting power information according to an exemplary embodiment. Referring to FIG. 10, the apparatus 200 is configured in a terminal. The apparatus 200 includes: a processing module 201, configured to, in response to the terminal satisfying a reporting control condition, determine power domain information of the terminal, in which the power domain information describes information related to a power of the terminal; and a sending module 202, configured to send the power domain information to a network device.

In the disclosure, the terminal may send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the reporting control condition includes at least one of: a predefined period timer, the predefined period timer indicating the terminal to send the power domain information to the network device according to a preset period; a predefined prohibition timer, the prohibition timer indicating the terminal not to send the power domain information within a specified time period; a transmission interruption within a UL duty cycle caused by an SAR or an MPE; a subsequent transmission power reduction corresponding to an estimated remaining transmission time within the UL duty cycle caused by the SAR or the MPE; a power class change that occurs on at least one carrier within the UL duty cycle caused by the SAR or the MPE; a prediction change of the UL duty cycle or a configuration change of the UL duty cycle; a power class fallback caused by a power-saving requirement; or a channel change-related trigger condition.

The disclosure provides a plurality of reporting control conditions, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the subsequent transmission power reduction corresponding to the estimated remaining transmission time within the UL duty cycle caused by the SAR or the MPE, satisfying the reporting control condition includes at least one of: a transmit power of the terminal for a subsequent UL transmission corresponding to the estimated remaining transmission time within the UL duty cycle being less than a transmit power threshold; or a remaining energy of the terminal for a subsequent UL transmission corresponding to the estimated remaining transmission time within the UL duty cycle being less than an energy threshold.

In the disclosure, the terminal may be triggered to report the power domain information via the corresponding threshold, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the power class change that occurs on at least one carrier within the UL duty cycle caused by the SAR or the MPE, satisfying the reporting control condition includes at least one of: in a plurality of carriers of CA/DC, the power class fallback existing on at least one carrier during a transmitted time within the UL duty cycle; or in a plurality of carriers of CA/DC, the power class fallback existing on at least one carrier during the estimated remaining transmission time within the UL duty cycle.

In the disclosure, the terminal may be triggered to report the power domain information via the power class fallback existing on the at least one carrier, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the prediction change of the UL duty cycle or the configuration change of the UL duty cycle, satisfying the reporting control condition includes at least one of: readjusting, by the terminal, the UL duty cycle based on a change in the SAR or the MPE; or adjusting, by the terminal, the UL duty cycle based on a service transmission requirement.

In the disclosure, the terminal may be triggered to report the power domain information via the change of the UL duty cycle, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the channel change-related trigger condition, satisfying the reporting control condition includes: a path loss change value being greater than a preset path loss threshold.

In the disclosure, the terminal may be triggered to report the power domain information via the change of the path loss, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the power domain information includes at least one of: power headroom information of the terminal; energy headroom information of the terminal; maximum transmit power information of the terminal; power class information of the terminal on different carriers; power fallback information of the terminal on different carriers; current transmit power information of the terminal; or maximum duty cycle information or duty cycle information of the terminal.

The disclosure provides a plurality of types of information included in the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the power domain information is carried in any one of: an MAC CE signaling for carrying a power headroom report; or a newly added MAC CE signaling for carrying the power domain information.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition not including a period timer and a prohibition timer, the power domain information is carried in any one of: UCI; or an RRC signaling.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

FIG. 11 is a block diagram illustrating an apparatus for reporting power information according to an exemplary embodiment. Referring to FIG. 11, the apparatus 300 is configured in a network device. The apparatus 300 includes: a receiving module 301, configured to receive power domain information from a terminal when the terminal satisfies a reporting control condition, in which the power domain information describes information related to a power of the terminal.

In the disclosure, the network device may receive the power domain information from the terminal that satisfies the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the reporting control condition includes at least one of: a predefined period timer, the predefined period timer indicating the terminal to send the power domain information to the network device according to a preset period; a predefined prohibition timer, the prohibition timer indicating the terminal not to send the power domain information within a specified time period; a transmission interruption within a UL duty cycle caused by an SAR or an MPE; a subsequent transmission power reduction corresponding to an estimated remaining transmission time within the UL duty cycle caused by the SAR or the MPE; a power class change that occurs on at least one carrier within the UL duty cycle caused by the SAR or the MPE; a prediction change of the UL duty cycle or a configuration change of the UL duty cycle; a power class fallback caused by a power-saving requirement; or a channel change-related trigger condition.

The disclosure provides a plurality of reporting control conditions, enabling the network device to receive the power domain information from the terminal that satisfies the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the subsequent transmission power reduction corresponding to the estimated remaining transmission time within the UL duty cycle caused by the SAR or the MPE, satisfying the reporting control condition includes at least one of: a transmit power of the terminal for a subsequent UL transmission corresponding to the estimated remaining transmission time within the UL duty cycle being less than a transmit power threshold; or a remaining energy of the terminal for a subsequent UL transmission corresponding to the estimated remaining transmission time within the UL duty cycle being less than an energy threshold.

In the disclosure, the terminal may be triggered to report the power domain information via the corresponding threshold, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the power class change that occurs on at least one carrier within the UL duty cycle caused by the SAR or the MPE, satisfying the reporting control condition includes at least one of: in a plurality of carriers of CA/DC, the power class fallback existing on at least one carrier during a transmitted time within the UL duty cycle; or in a plurality of carriers of CA/DC, the power class fallback existing on at least one carrier during the estimated remaining transmission time within the UL duty cycle.

In the disclosure, the terminal may be triggered to report the power domain information via the power class fallback existing on the at least one carrier, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the prediction change of the UL duty cycle or the configuration change of the UL duty cycle, satisfying the reporting control condition includes at least one of: readjusting, by the terminal, the UL duty cycle based on a change in the SAR or the MPE; or adjusting, by the terminal, the UL duty cycle based on a service transmission requirement.

In the disclosure, the terminal may be triggered to report the power domain information via the change of the UL duty cycle, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition being the channel change-related trigger condition, satisfying the reporting control condition includes: a path loss change value being greater than a preset path loss threshold.

In the disclosure, the terminal may be triggered to report the power domain information via the change of the path loss, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the power domain information includes at least one of: power headroom information of the terminal; energy headroom information of the terminal; maximum transmit power information of the terminal; power class information of the terminal on different carriers; power fallback information of the terminal on different carriers; current transmit power information of the terminal; or maximum duty cycle information or duty cycle information of the terminal.

The disclosure provides a plurality of types of information included in the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, the power domain information is carried in any one of: an MAC CE signaling for carrying a power headroom report; or a newly added MAC CE signaling for carrying the power domain information.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

In some implementations, in response to the reporting control condition not including a period timer and a prohibition timer, the power domain information is carried in any one of: UCI; or an RRC signaling.

The disclosure provides a plurality of methods to carry the power domain information, enabling the terminal to send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

It should be noted that the various modules/units involved in the apparatus 300 involved in the embodiments of the disclosure are illustrated exemplarily only and are not limited herein. For example, the apparatus 300 in the embodiments of the disclosure may also include a sending module and/or a processing module. The various modules included in the apparatus 300 may interact with each other and with other network element devices.

The specific ways in which the individual modules of the apparatuses in the above embodiments perform the operations have been described in detail in the embodiments relating to the method, and will not be illustrated in detail herein.

FIG. 12 is a block diagram illustrating a device for reporting power information according to an exemplary embodiment. For example, the device 400 may be a cell phone, a computer, a digital broadcasting terminal, a message transceiver device, a gaming console, a tablet device, a medical device, a fitness device, a personal digital assistant, etc.

Referring to FIG. 12, the device 400 may include one or more of the following components: a processing component 402, a memory 404, a power supply component 406, a multimedia component 408, an audio component 410, an inputs/outputs interface (I/O) 412, a sensor component 414, and a communication component 416.

The processing component 402 generally controls the overall operation of the device 400, such as operations associated with displays, telephone calls, data communications, camera operations, and recording operations. The processing component 402 may include one or more processors 420 to execute instructions to accomplish all or some of the steps of the method described above. Alternatively, the processing component 402 may include one or more modules to facilitate interaction between the processing component 402 and other components. For example, the processing component 402 may include a multimedia module to facilitate interaction between the multimedia component 408 and the processing component 402.

The memory 404 is configured to store various types of data to support operation at the device 400. Examples of such data include instructions for any application program or method operated on the device 400, contact data, phone book data, messages, pictures, videos, etc. The memory 404 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or CD-ROM.

The power supply component 406 provides power to the various components of the device 400. The power supply component 406 may include a power management system, one or more power supplies, and other components associated with generating, managing, and distributing power for the device 400.

The multimedia component 408 includes a screen providing an output interface between the device 400 and a user. In some embodiments, the screen may include a liquid crystal display (LCD) and a touch panel (TP). In case the screen includes a touch panel, the screen may be implemented as a touch screen to receive input signals from the user. The touch panel includes one or more touch sensors to sense touches, swipes, and gestures on the touch panel. The touch sensors may sense a boundary of a touch or swipe action, and detect a duration and pressure associated with the touch or swipe operation. In some embodiments, the multimedia component 408 includes a front-facing camera and/or a rear-facing camera. The front camera and/or the rear camera may receive external multimedia data when the device 400 is in an operating mode, such as a shooting mode or a video mode. Each of the front camera and the rear camera may be a fixed optical lens system or have a focal length and optical zoom capability.

The audio component 410 is configured to output and/or input audio signals. For example, the audio component 410 includes a microphone (MIC) that is configured to receive external audio signals when the device 400 is in an operational mode, such as a call mode, a recording mode, and a voice recognition mode. The received audio signals may be further stored in the memory 404 or sent in the communication component 416. In some embodiments, the audio component 410 further includes a speaker for outputting audio signals.

The I/ O interface 412 provides an interface between the processing component 402 and a peripheral interface module, said peripheral interface module may be a keypad, a click wheel, buttons, etc. These buttons may include, but are not limited to: a home button, a volume button, a start button, and a lock button.

The sensor component 414 includes one or more sensors for providing various aspects of status assessment for the device 400. For example, the sensor component 414 may detect an open/closed state of the device 400, the relative positioning of components, such as the components being the display and keypad of the device 400, the sensor component 414 may also detect a change in the position of the device 400 or one of the components of the device 400, the presence or absence of user contact with the device 400, the orientation of the device 400 or acceleration/deceleration of the device 400, and the temperature change of the device 400. The sensor component 414 may include a proximity sensor configured to detect the presence of a nearby object in the absence of any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication between the device 400 and other devices by wired or wireless means. The device 400 may access a wireless network based on a communication standard, such as Wi-Fi, 2G or 3G, or their combination. In an exemplary embodiment, the communication component 416 receives broadcast signals or broadcast-related information from an external broadcast management system in a broadcast channel. In an exemplary embodiment, the communication component 416 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the device 400 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 404 including instructions, the instructions being executable by a processor 420 of the device 400 for accomplishing the above-described method. For example, the non-transitory computer-readable storage medium may be an ROM, a random access memory (RAM), a CD-ROM, magnetic tape, a floppy disks, and optical data storage devices, etc.

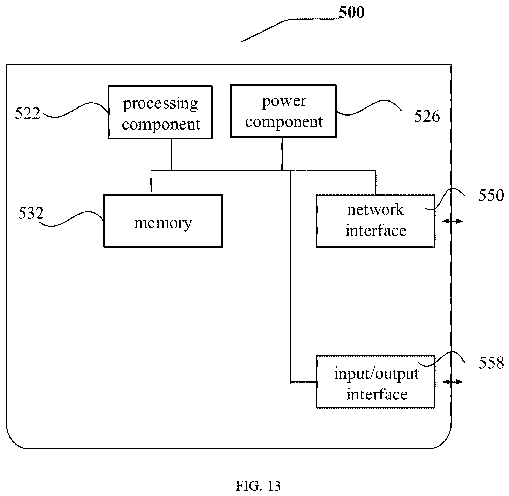

FIG. 13 is a block diagram illustrating another device for reporting power information according to an exemplary embodiment. For example, the device 500 may be provided as a base station or a server. Referring to FIG. 13, the device 500 includes a processing component 522, which further includes one or more processors, and a memory resource represented by a memory 532 for storing instructions that may be executed by the processing component 522, such as an application program. The application program stored in memory 532 may include one or more modules each corresponding to a set of instructions. Alternatively, the processing component 522 is configured to execute the instructions to perform the method described above.

The device 500 may also include a power component 526 configured to perform power management of the device 500, a wired or wireless network interface 550 configured to connect the device 500 to a network, and an input/output (I/O) interface 558. The device 500 may operate an operating system based on the operating system stored in the memory 532, such as Windows Server ^{™}, Mac OS X^{™}, Unix^{™}, Linux^{™}, FreeBSD^{™}, or the like.

In the disclosure, the terminal may send the power domain information to the network device via the reporting control condition, thus supporting efficient and reasonable enhanced reporting of the terminal. This facilitates the network to achieve more optimal scheduling, more suitable scheduling for service transmission requirements. Consequently, system throughput and user coverage are enhanced, system efficiency is improved, invalid scheduling of the network device is reduced, and unnecessary power consumption are further saved for the terminal.

It may be further understood that in the disclosure, the term "a plurality of" refers to two or more than two, and other quantifiers are used similarly. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. The singular forms "a/an", "said" and "the" are also intended to include the plural forms unless the context clearly dictates otherwise.

It may be further understood that the terms "first", "second", etc., are used to describe various types of information, but such information should not be limited to these terms. These terms are only configured to distinguish the same type of information from one another and do not indicate a particular order or level of importance. Indeed, the expressions "first", "second", etc. may be used completely interchangeably. For example, without departing from the scope of the disclosure, first information may also be called second information, and similarly, second information may also be called first information.

It may be further understood that in the disclosure, the meaning of the terms "in response to" and "if" depends on the context and the actual scenarios in which they are used. As used herein, the term "responsive to" may be interpreted as "in the case that "or "when" or "if" or "in case of ".

It may be further understood that although operations are described in a specific order in the figures according to the embodiments of the disclosure, it should not be understood as requiring that these operations be performed in the specific order illustrated or in a serial order, or that perform all operations illustrated to obtain the desired result. In certain circumstances, multitasking and parallel processing may be advantageous.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses, or adaptations follow the general principles of the embodiments of the disclosure and include those in the technical field not disclosed by the embodiments of the disclosure common knowledge or common technical means.

It should be understood that the embodiments of the disclosure are not limited to the precise structures described above and shown in the figures, and various modifications and changes can be made without departing from the scope thereof. The scope of embodiments of the disclosure is limited only by the appended claims.

## Claims

1. A method for reporting power information, applied to a terminal, comprising:
in response to the terminal satisfying a reporting control condition, determining power domain information of the terminal, wherein the power domain information describes information related to a power of the terminal; and
sending the power domain information to a network device.

2. The method according to claim 1, wherein the reporting control condition comprises at least one of:
a predefined period timer, the period timer indicating the terminal to send the power domain information to the network device according to a preset period;
a predefined prohibition timer, the prohibition timer indicating the terminal not to send the power domain information within a specified time period;
a transmission interruption within an uplink (UL) duty cycle caused by a specific absorption rate (SAR) or a maximum permissible exposure (MPE);
a subsequent transmission power reduction corresponding to an estimated remaining transmission time within the UL duty cycle caused by the SAR or the MPE;
a power class change that occurs on at least one carrier within the UL duty cycle caused by the SAR or the MPE;
a prediction change of the UL duty cycle or a configuration change of the UL duty cycle;
a power class fallback caused by a power-saving requirement; or
a channel change-related trigger condition.

3. The method according to claim 2, wherein in response to the reporting control condition being the subsequent transmission power reduction corresponding to the estimated remaining transmission time within the UL duty cycle caused by the SAR or the MPE, satisfying the reporting control condition comprises at least one of:
a transmit power of the terminal for a subsequent UL transmission corresponding to the estimated remaining transmission time within the UL duty cycle being less than a transmit power threshold; or
a remaining energy of the terminal for a subsequent UL transmission corresponding to the estimated remaining transmission time within the UL duty cycle being less than an energy threshold.

4. The method according to claim 2, wherein in response to the reporting control condition being the power class change that occurs on at least one carrier within the UL duty cycle caused by the SAR or the MPE, satisfying the reporting control condition comprises at least one of:
in a plurality of carriers of carrier aggregation (CA)/dual connectivity (DC), the power class fallback existing on at least one carrier during a transmitted time within the UL duty cycle; or
in a plurality of carriers of CA/ DC, the power class fallback existing on at least one carrier during the estimated remaining transmission time within the UL duty cycle.

5. The method according to claim 2, wherein in response to the reporting control condition being the prediction change of the UL duty cycle or the configuration change of the UL duty cycle, satisfying the reporting control condition comprises at least one of:
readjusting, by the terminal, the UL duty cycle based on a change in the SAR or the MPE; or
adjusting, by the terminal, the UL duty cycle based on a service transmission requirement.

6. The method according to claim 2, wherein in response to the reporting control condition being the channel change-related trigger condition, satisfying the reporting control condition comprises:
a path loss change value being greater than a preset path loss threshold.

7. The method according to any one of claims 1 to 6, wherein the power domain information comprises at least one of:
power headroom information of the terminal;
energy headroom information of the terminal;
maximum transmit power information of the terminal;
power class information of the terminal on different carriers;
power fallback information of the terminal on different carriers;
current transmit power information of the terminal; or
maximum duty cycle information or duty cycle information of the terminal.

8. The method according to any one of claims 1 to 7, wherein the power domain information is carried in any one of:
a media access control (MAC) control element (CE) signaling for carrying a power headroom report; or
a newly added MAC CE signaling for carrying the power domain information.

9. The method according to any one of claims 1 to 7, wherein in response to the reporting control condition not comprising a period timer and a prohibition timer, the power domain information is carried in any one of:
uplink control information (UCI); or
a radio resource control (RRC) signaling.

10. A method for reporting power information, applied to a network device, comprising:
receiving power domain information from a terminal when the terminal satisfies a reporting control condition, wherein the power domain information describes information related to a power of the terminal.

11. The method according to claim 10, wherein the reporting control condition comprises at least one of:
a predefined period timer, the predefined period timer indicating the terminal to send the power domain information to the network device according to a preset period;
a predefined prohibition timer, the prohibition timer indicating the terminal not to send the power domain information within a specified time period;
a transmission interruption within an uplink (UL) duty cycle caused by a specific absorption rate (SAR) or a maximum permissible exposure (MPE);
a subsequent transmission power reduction corresponding to an estimated remaining transmission time within the UL duty cycle caused by the SAR or the MPE;
a power class change that occurs on at least one carrier within the UL duty cycle caused by the SAR or the MPE;
a prediction change of the UL duty cycle or a configuration change of the UL duty cycle;
a power class fallback caused by a power-saving requirement; or
a channel change-related trigger condition.

12. The method according to claim 11, wherein in response to the reporting control condition the subsequent transmission power reduction corresponding to the estimated remaining transmission time within the UL duty cycle caused by the SAR or the MPE, satisfying the reporting control condition comprises at least one of:
a transmit power of the terminal for a subsequent UL transmission corresponding to the estimated remaining transmission time within the UL duty cycle being less than a transmit power threshold; or
a remaining energy of the terminal for a subsequent UL transmission corresponding to the estimated remaining transmission time within the UL duty cycle being less than an energy threshold.

13. The method according to claim 11, wherein in response to the reporting control condition being the power class change that occurs on at least one carrier within the UL duty cycle caused by the SAR or the MPE, satisfying the reporting control condition comprises at least one of:
in a plurality of carriers of carrier aggregation (CA)/dual connectivity (DC), the power class fallback existing on at least one carrier during a transmitted time within the UL duty cycle; or
in a plurality of carriers of CA/ DC, the power class fallback existing on at least one carrier during the estimated remaining transmission time within the UL duty cycle.

14. The method according to claim 11, wherein in response to the reporting control condition being the prediction change of the UL duty cycle or the configuration change of the UL duty cycle, satisfying the reporting control condition comprises at least one of:
readjusting, by the terminal, the UL duty cycle based on a change in the SAR or the MPE; or
adjusting, by the terminal, the UL duty cycle based on a service transmission requirement.

15. The method according to claim 11, wherein in response to the reporting control condition being the channel change-related trigger condition, satisfying the reporting control condition comprises:
a path loss change value being greater than a preset path loss threshold.

16. The method according to any one of claims 10 to 15, wherein the power domain information comprises at least one of:
power headroom information of the terminal;
energy headroom information of the terminal;
maximum transmit power information of the terminal;
power class information of the terminal on different carriers;
power fallback information of the terminal on different carriers;
current transmit power information of the terminal; or
maximum duty cycle information or duty cycle information of the terminal.

17. The method according to any one of claims 10 to 16, wherein the power domain information is carried in any one of:
a media access control (MAC) control element (CE) signaling for carrying a power headroom report; or
a newly added MAC CE signaling for carrying the power domain information.

18. The method according to any one of claims 10 to 16, wherein in response to the reporting control condition not comprising a period timer and a prohibition timer, the power domain information is carried in any one of:
uplink control information (UCI); or
a radio resource control (RRC) signaling.

19. An apparatus for reporting power information, configured in a terminal, comprising:
a processing module, configured to, in response to the terminal satisfying a reporting control condition, determine power domain information of the terminal, wherein the power domain information describes information related to a power of the terminal; and
a sending module, configured to send the power domain information to a network device.

20. An apparatus for reporting power information, configured in a network device, comprising:
a receiving module, configured to receive power domain information from a terminal when the terminal satisfies a reporting control condition, wherein the power domain information describes information related to a power of the terminal.

21. A device for reporting power information, comprising:
a processor; and
a memory storing processor executable instructions;
wherein the processor is configured to: perform the method according to any one of claims 1 to 9.

22. A device for reporting power information, comprising:
a processor; and
a memory storing processor executable instructions;
wherein the processor is configured to: perform the method according to any one of claims 10 to 18.

23. A non-transitory computer-readable storage medium, wherein instructions in the storage medium, when executed by a processor of the terminal, enable the terminal to perform the method according to any one of claims 1 to 9.

24. A non-transitory computer-readable storage medium, wherein instructions in the storage medium, when executed by a processor of the network device, enable the terminal to perform the method according to any one of claims 10 to 18.
